Europäisches Patentamt

**European Patent Office**

**Office européen des brevets**

(11) Numéro de publication: **0 208 922**
**A1**

# (12) DEMANDE DE BREVET EUROPEEN

(21) Numéro de dépôt: 86106099.2

(51) Int. Cl.⁴: **A 47 J 27/00, A 47 J 37/01**

(22) Date de dépôt: 13.06.86

(30) Priorité: 19.07.85 CH 3131/85

(71) Demandeur: **Terraillon, Marc, 16, rue des Granges, CH-1204 Genève (CH)**

(43) Date de publication de la demande: **21.01.87 Bulletin 87/4**

(72) Inventeur: **Terraillon, Marc, 16, rue des Granges, CH-1204 Genève (CH)**

(74) Mandataire: **Micheli, Michel-Pierre et al, MICHELI & CIE 116, Rue du Rhône Case Postale 47, CH-1211 Genève 6 (CH)**

(84) Etats contractants désignés: **DE FR GB IT**

(54) **Plat isothermique chauffant lavable.**

(57) Il comporte un récipient (1) formé de deux coques (3, 4) soudées ensemble et définissant un espace interne (5). Une résistance chauffante (6) disposée dans cet espace (5) est fixée et positionnée sur la coque interne par des picots (7). Un thermostat (12) est situé dans l'espace interne (5) et son organe de manœuvre (13) accessible de l'extérieur du récipient (1) traverse la coque (4) de façon étanche de même que les plots (10) d'une prise d'alimentation (11) également située dans l'espace interne (5).

EP 0 208 922 A1

Dans l'alimentation moderne, il est usuel de déguster des aliments chauds à l'occasion des principaux repas.

Le chauffage et le maintien en température des aliments pose des problèmes qui compliquent l'existence de la ménagère et nécessite un matériel important tel que unité de chauffage, casserole, plats de présentation entraînant des dépenses élevées.

Le chauffage des aliments est effectué par apport d'énergie, opération effectuée la plupart du temps dans un récipient particulier, casserole, cocotte, etc... Ce récipient spécifique est nécessaire du fait de la violence des sources chaudes, gaz, plaque électrique, qui ne sera pas supportée par la plupart des plats destinés à présenter les aliments.

On a essayé de résoudre le problème de la violence du chauffage en adaptant des unités de chauffage autour des plats de présentation ou autour d'éléments destinés à contenir les aliments.

Le maintien à la bonne température des aliments est important pour les qualités gustatives de ces derniers. Cette fonction est actuellement assurée par des chauffe-plats qui sont disposés sur les tables ou par certains plats thermos. Le coût de ces produits est toujours important et leur usage est peu pratique.

On a également proposé des récipients en matière plastique ou en métal munis d'un dispositif de chauffage incorporé tels que ceux décrits par exemple dans les brevets FR 2.355.487 ou FR 2.532.834. Ces appareils sont onéreux et difficiles à réaliser, car l'incorporation de la résistance chauffante dans leur fond ou leurs parois est une opération délicate, longue et nécessitant des moules ou appareillages compliqués. De plus, ces appareils chauffants ne sont prévus soit que pour la cuisson, soit que pour le maintien en température des mets généralement.

La présente invention a pour objet un plat isothermique chauffant lavable permettant de regrouper les fonctions de chauffage ou de cuisson; de maintien des aliments en température et de présentation des aliments de façon pratique. De plus, le plat proposé présente l'avantage d'une fabrication simple et peu coûteuse.

Le plat isothermique chauffant lavable selon la présente invention comporte un récipient, caractérisé par le fait qu'il est formé d'une coque interne et d'une coque externe soudées l'une sur l'autre de façon étanche et formant un corps creux dont l'espace interne est scellé; par le fait que la coque interne comporte sur sa paroi faisant face à la coque externe des organes d'accrochage servant de support et de positionnement à une résistance électrique isolée dont les bornes sont reliées aux plots d'une fiche solidaire de la coque externe, lesdits plots étant accessibles de l'extérieur du récipient; et par le fait qu'il comporte un organe de réglage de la température situé dans l'espace interne du récipient comportant un organe de manoeuvre accessible depuis l'extérieur dudit récipient.

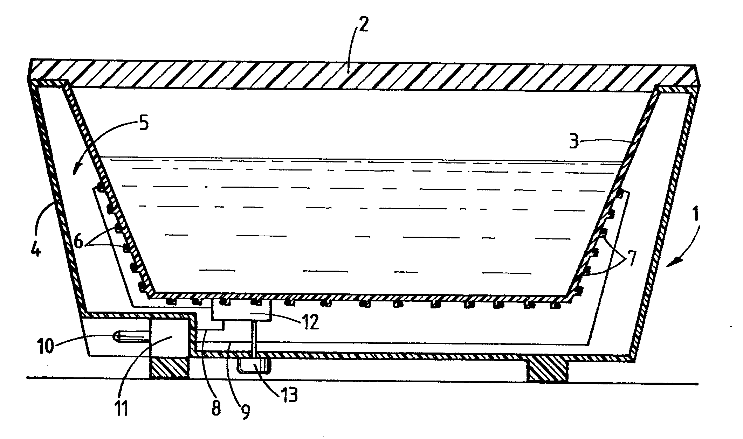

La figure unique du dessin annexé illustre schématiquement et à titre d'exemple une forme d'exécution du plat selon l'invention vu en coupe transversale.

Le présent plat isothermique chauffant lavable est particulièrement économique du fait de sa conception originale qui permet sa fabrication et son montage à l'aide de techniques bien éprouvées et faciles à mettre en oeuvre.

Ce plat est constitué par un récipient 1 muni d'un couvercle isotherme 2. Ce couvercle 2 peut être en matière plastique, creux ou plein et s'adapte par emboîtage sur l'ouverture du récipient 1.

Le récipient est constitué d'une coque thermoplastique interne 3 et d'une coque thermoplastique externe 4 fixées l'une à l'autre de façon étanche, par exemple par soudage ou toute autre technique adéquate.

Dans la forme d'exécution illustrée, l'espace interne 5 entre les deux coques 3, 4 est rempli d'air et celui-ci assure une bonne isolation du récipient. Cet espace interne 5 pourrait dans des variantes être rempli d'un isolant comme de la laine de verre ou de la matière plastique expansée par exemple. Ce vide peut également être rempli avec de la parafine qui constitue un excellent accumulateur de calories et qui restitue celles-ci à une température proche de la température de consommation des aliments.

L'espace interne 5 du récipient 1 renferme encore le dispositif de chauffage qui est constitué par une résistance électrique chauffante 6 fixée et positionnée sur la paroi de la coque interne 3 à l'aide d'organes de fixation 7 se présentant par exemple sous la forme de picots.

Les bornes 8, 9 de la résistance chauffante 6 sont reliées aux plots 10 d'une prise 11 solidaire de la coque externe 4 et assurent une traversée étanche de cette coque pour l'alimentation en énergie électrique.

Le dispositif de chauffage comporte encore un thermostat 12 également situé dans l'espace permettant de régler la température de chauffage au moyen d'un organe de manoeuvre 13 traversant de façon étanche la coque externe 4 pour être accessible de l'extérieur du récipient.

Ce dispositif de chauffage est conçu pour permettre un chauffage à une température de 115°C environ, permettant la cuisson des aliments. Une fois les aliments cuits, la température est ajustée à une valeur de maintien aux environs de 50 à 60°C généralement, correspondant à

la température de consommantion des aliments.

Dans une variante, le thermostat peut être remplacé par un commutateur permettant de régler la température soit à une valeur de cuisson de 100 à 115°C, soit à une valeur de maintien en température d'environ 40 à 60°C.

Pour obtenir une meilleure distribution de la chaleur il est possible d'intercaler entre la paroi de la coque interne 3 et la résistance 6 une feuille ou plaque métallique ou d'un matériau conducteur de la chaleur.

Le récipient étant étanche, il est possible de le laver comme les plats normaux. Ses dimensions et sa profondeur peuvent varier suivant le type d'aliments à chauffer et le nombres de portions devant être contenues.

Si on le désire, ce plat chauffant peut être utilisé sans couvercle ou comme chauffe-plats ou assiettes, dans ce cas les plats à chauffer sont mis à la place des aliments dans le plat chauffant.

## REVENDICATIONS

1.      Plat isothermique chauffant lavable, caractérisé par le fait qu'il est formé d'une coque interne et d'une coque externe soudées l'une à l'autre de façon étanche et formant un corps creux dont l'espace interne est scellé; par le fait que la coque interne comporte sur sa paroi faisant face à la coque externe des organes d'accrochage servant de support et de positionnement à une résistance électrique isolée, dont les bornes sont reliées aux plots d'une fiche solidaire de la coque externe, lesdits plots étant accessibles de l'extérieur du récipient; et par le fait qu'il comporte un organe de réglage de la température situé dans l'espace interne du récipient comportant un organe de manoeuvre accessible depuis l'extérieur dudit récipient.

2.      Plat selon la revendication 1, caractérisé par le fait qu'il comporte un couvercle isothermique s'adaptant sur l'ouverture du récipient.

3.      Plat selon la revendication 1 ou la revendication 2, caractérisé par le fait que l'organe de réglage de la température est un commutateur permettant de choisir entre plusieurs températures de chauffage distinctes.

4.      Plat selon la revendication 1 ou la revendication 2, caractérisé par le fait que l'organe de réglage de la température est un thermostat permettant de varier de façon continue la température de chauffage.

5.      Plat selon la revendication 1, caractérisé par le fait que l'espace entre les deux coques est rempli d'air.

0208922

6.		Plat selon la revendication 1, caractérisé par le fait que la pression régnant dans l'espace compris entre les deux coques est inférieur à la pression atmosphérique.

7.		Plat selon la revendication 1, caractérisé par le fait que l'espace compris entre les deux coques est rempli d'un matériau isolant.

8.		Plat selon la revendication 1, caractérisé par le fait que l'espace compris entre les deux coques est rempli de parafine.

9.		Plat selon l'une des revendications précédentes caractérisé par le fait qu'une feuille ou plaque d'un matériau conducteur de la chaleur est insérée entre la coque interne et la résistance chauffante.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 387 603 (ST. PIERRE et al.) <br> * Page 2, ligne 25 - page 3, ligne 29; figures 1-4 * | 1,2,5, 9 | A 47 J 27/00 <br> A 47 J 37/01 |
| | --- | | |
| X | FR-A- 502 845 (MALHOMME) <br> * En entier * | 1,5 | |
| | --- | | |
| X | FR-A- 984 963 (DUCHE) <br> * En entier * | 1,2,5 | |
| | --- | | |
| X | US-A-1 621 758 (SHAW) <br> * En entier * | 1,6 | |
| | --- | | |
| X | FR-A-2 120 637 (TALLIER) <br> * En entier * | 1,2,4, 7 | |
| | | | DOMAINES TECHNIQUES RECHERCHES (Int. Cl.4) |
| X | FR-A- 467 686 (HEGNER) <br> * En entier * | 1,2,6 | A 47 J |
| | --- | | |
| X | US-A-3 038 058 (GORDON Jr.) <br> * En entier * | 1,8 | |
| | --- | | |
| A | US-A-1 414 494 (ARNTFIELD) <br> * En entier * | 1,4 | |
| | --- | | |
| D,A | FR-A-2 532 834 (TALLIER) | | |
| | --- -/- | | |

Le présent rapport de recherche a été établi pour toutes les revendications

| Lieu de la recherche <br> LA HAYE | Date d'achèvement de la recherche <br> 29-10-1986 | Examinateur <br> SCHARTZ J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| | **DOCUMENTS CONSIDERES COMME PERTINENTS** | | Page 2 |

Office européen
des brevets

**RAPPORT DE RECHERCHE EUROPEENNE**

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 355 487 (BOISSERAND) | | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 29-10-1986 | SCHARTZ J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82